# FASCICULE DE BREVET EUROPEEN

(11) **EP 3 582 141 B1**
(45) Date de publication et mention de la délivrance du brevet: **31.08.2022**
(21) Numéro de dépôt: 19179794.3
(22) Date de dépôt: 12.06.2019
(51) Int. Cl.: G06V 10/44, G06V 10/82, G06V 40/70, G06K 9/62

(54) **PROCÉDÉ D'APPRENTISSAGE DE PARAMÈTRES D'UN RÉSEAU DE NEURONES À CONVOLUTION**
VERFAHREN ZUM LERNEN VON PARAMETERN EINES NEURONALEN NETZTES MIT KONVOLUTION
METHOD FOR LEARNING PARAMETERS OF A CONVOLUTIONAL NEURAL NETWORK

(30) Priorité: 13.06.2018 FR 1855170
(43) Date de publication de la demande: 18.12.2019
(73) Titulaire: Idemia Identity & Security France, 92400 Courbevoie (FR)
(72) Inventeur: GIRARD, Fantin, 92400 COURBEVOIE (FR); THUILLIER, Cédric, 92400 COURBEVOIE (FR); MILGRAM, Jonathan, 92400 COURBEVOIE (FR)
(74) Mandataire: Idemia

(56) Documents cités:
- Søren Hauberg ET AL: "Dreaming More Data: Class-dependent Distributions over Diffeomorphisms for Learned Data Augmentation", , 30 juin 2016 (2016-06-30), pages 1-9, XP055559187, Extrait de l'Internet: URL:https://arxiv.org/pdf/1510.02795v2.pdf [extrait le 2019-02-20]
- DANIEL MICHELSANTI ET AL: "Fast Fingerprint Classification with Deep Neural Networks :", PROCEEDINGS OF THE 12TH INTERNATIONAL JOINT CONFERENCE ON COMPUTER VISION, IMAGING AND COMPUTER GRAPHICS THEORY AND APPLICATIONS, 27 février 2017 (2017-02-27), pages 202-209, XP055559986, DOI: 10.5220/0006116502020209 ISBN: 978-989-7582-27-1
- Luke Taylor ET AL: "Improving Deep Learning using Generic Data Augmentation", , 20 août 2017 (2017-08-20), pages 1-6, XP055559992, Extrait de l'Internet: URL:https://arxiv.org/pdf/1708.06020.pdf [extrait le 2019-02-21]
- Antreas Antoniou ET AL: "Data Augmentation Generative Adversarial Networks", , 21 mars 2018 (2018-03-21), pages 1-14, XP055560011, Extrait de l'Internet: URL:https://arxiv.org/pdf/1711.04340.pdf [extrait le 2019-02-21]

## Description

### DOMAINE TECHNIQUE GENERAL

La présente invention concerne le domaine de l'apprentissage supervisé, et en particulier un procédé d'apprentissage de paramètres d'un réseau de neurones à convolution, en vue de la classification d'une donnée d'entrée au moyen du réseau de neurones à convolution appris.

### ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

On connait tout particulièrement une utilisation des CNN dans le domaine de l'authentification/identification biométrique. En effet, un CNN peut être entraîné à reconnaitre un individu sur la base de traits biométriques de cet individu tels que les empreintes digitales (reconnaissance digitale), l'iris ou le visage (reconnaissance faciale). Dans la mesure où ces données sont manipulées sous formes d'images, le CNN s'avère très efficace.

Les approches biométriques classiques utilisent les informations caractéristiques du trait biométrique extraites à partir de la biométrie acquise, appelées « features », et l'apprentissage/classification est réalisé sur la base de la comparaison de ces caractéristiques.

Par exemple, dans le cas de la reconnaissance d'empreintes digitales, les images d'extrémité de doigt sont traitées de sorte à extraire les caractéristiques d'une empreinte qui peuvent être classées en trois catégories :
- Le niveau 1 comprend le motif général de cette empreinte (une des quatre classes : boucle à droite, boucle à gauche, arche et spirale)
- Le niveau 2 comprend les points particuliers des empreintes appelés minuties. Les approches classiques de reconnaissance utilisent essentiellement ces caractéristiques.
- Le niveau 3 comprend la forme des crêtes, les pores de la peau, etc.

Les approches récentes dans le domaine de l'apprentissage profond ont permis des avancées majeures notamment dans le domaine de la reconnaissance faciale. Ces approches permettent de représenter la biométrie par un vecteur réduit sans qu'il ne soit plus nécessaire d'extraire explicitement les caractéristiques. En d'autres termes, l'apprentissage/classification peut être réalisé directement sur la base des photographies de visage.

L'application de telles approches à la reconnaissance d'empreintes digitales se heurte aux spécificités inhérentes aux empreintes digitales et les performances n'ont jusqu'à ce jour pas été convaincantes. En particulier, les CNN requièrent un volume de données d'apprentissage plus important.

On connait des techniques dites « d'augmentation » visant à augmenter artificiellement le volume de données d'entrée pour éviter le sur-apprentissage et permettre la généralisation du modèle pour de nouvelles empreintes, c'est-à-dire à dire que les « exemplaires originaux » des données d'apprentissage sont modifiées aléatoirement, afin de montrer une plus grande variabilité à l'entrée du réseau de neurone lors de l'apprentissage.

Les techniques d'augmentation de données connues consistent à exercer des modifications aléatoires.

Généralement, les augmentations de données réalisées dans le domaine de la reconnaissance d'image se limitent à des modifications d'intensité (contraste, luminosité, etc.) ou des modifications géométriques simples (rotation, translation, perspective), comme proposé par exemple dans le document Krizhevsky, A., Sutskever, I., & Hinton, G. E. (2012). Imagenet classification with deep convolutional neural networks. In Advances in neural information processing systems (pp. 1097-1105*).*

Cependant, les empreintes digitales ont des variabilités spécifiques étant donné qu'une empreinte est généralement une projection 3d du doigt soit par contact sur un capteur ou par photo du doigt. Cela implique l'addition de distorsion non-linéaire et de modifications de l'intensité spécifiques pour l'empreinte digitale. Il est par exemple proposé dans le document R. Cappelli, D. Maio, D. Maltoni, "Synthetic Fingerprint-Database Generation", Proc. 16th Int'l Conf. Pattern Recognition, pp. 744-747, 2002-Aug. doi: 10.1109/ICPR.2002.1048096 l'utilisation de modèles physiques définis a priori pour synthétiser des empreintes. Ces modèles sont très spécifiques aux capteurs avec contact, et s'avèrent assez limités.

Dans le document Soren Hauberg et al., « Dreaming More Data: Class-dependant Distributions over Diffeomorphisms for Learned Data Augmentation*",* il est proposé de générer des versions alternatives de données d'apprentissage par l'application d'au moins une transformation géométrique choisie parmi un ensemble de transformations de référence respectant une distribution statistique de transformations observées dans la base de données d'apprentissage. Si une telle technique s'avère intéressante pour rajouter de la variabilité, en particulier pour de la reconnaissance de caractère manuscrits (c'est l'exemple proposé) dans laquelle il n'y a que des petites déformations liées aux mouvements de la main, on constate qu'elle s'avère à nouveau peu adaptée aux empreintes digitales pour lesquelles il n'est pas rare d'avoir des très grandes distorsions locales et globales (par exemple liées à un écrasement du doigt ou une configuration du capteur), qui sont alors complètement ignorées par cette méthode.

On constate donc qu'il n'existe pas de technique d'augmentation de données d'apprentissage d'un CNN qui s'avère satisfaisante.

Il serait par conséquent souhaitable de disposer d'une solution plus performante d'apprentissage sur base de données de type image représentatives d'un trait biométrique, en particulier d'empreintes digitales, des paramètres d'un CNN pour la classification de données au moyen du CNN.

### PRESENTATION DE L'INVENTION

Selon un premier aspect, la présente invention concerne un procédé d'apprentissage de paramètres d'un réseau de neurones à convolution, CNN, pour la classification de données de type image représentatives d'un même trait biométrique, le procédé comprenant la mise en œuvre, par des moyens de traitement de données d'un serveur, d'étapes de :
(a) Génération, pour au moins une donnée d'une base de données d'apprentissage de données de type image représentatives d'un même trait biométrique déjà classifiées, de plusieurs versions alternatives de cette donnée chacune par l'application d'au moins une transformation choisie parmi un ensemble de transformations de référence respectant une distribution statistique de transformations observées dans la base de données d'apprentissage.
(b) Apprentissage, à partir de la base de données d'apprentissage déjà classifiées augmentée desdites versions alternatives des données, des paramètres dudit CNN ;
   dans lequel l'étape (a) comprend des sous-étapes de :
   (a1) Modélisation statistique des transformations observées dans ladite base de données d'apprentissage ;
   (a2) Détermination dudit ensemble de transformations de référence respectant une distribution statistique de transformations observées dans la base de données d'apprentissage, en fonction du résultat de ladite modélisation statistique.

Selon d'autres caractéristiques avantageuses et non limitatives :
- lesdits traits biométriques sont choisis parmi des empreintes digitales, des paumes, des visages, des iris, des silhouettes, des réseaux sanguins d'une partie du corps, et en particulier des empreintes digitales ;
- lesdites transformations sont des transformations géométriques et/ou des transformations en intensité ;
- lesdites transformations observées dans la base de données d'apprentissage sont les transformations non-linéaires permettant de passer de l'une à l'autre des données d'un couple de données d'apprentissage représentatives d'un même trait biométrique, l'étape (a1) comprenant la détermination des transformations observées ;
- lesdites transformations sont des transformations géométriques, la modélisation de l'étape (a1) comprenant la construction d'un atlas statistique des données d'apprentissage contenant une moyenne des transformations géométriques observées dans la base de données d'apprentissage ainsi que la variabilité de ces transformations géométriques observées sur la base de données d'apprentissage ;
- lesdites transformations géométriques observées dans la base de données d'apprentissage sont déterminées sous la forme d'un champ de distorsion non-difféomorphique, rendu difféomorphique par application d'une technique de régularisation ;
- ladite détermination des transformations géométriques observées dans la base de données d'apprentissage comprend le recalage préalable des données d'apprentissage dans un repère commun ;
- la construction dudit atlas statistique comprend en outre la mise en œuvre d'outils statistiques dans l'espace tangent audit champ de distorsion difféomorphique ;
- lesdits outils statistiques comprennent au moins l'analyse en composantes principales ;
- les transformations géométriques de référence sont déterminées à l'étape (a2) comme les transformations géométriques définies par les vecteurs propres issus de l'analyse en composantes principales ;
- l'étape (a) comprend outre l'application d'une transformation en intensité choisie parmi un ensemble de transformations en intensité de référence prédéterminées, pour générer les versions alternatives des données d'apprentissages.

Selon un deuxième aspect, la présente invention concerne un procédé de classification d'une donnée d'entrée, caractérisé en ce qu'il comprend la mise en œuvre du procédé d'apprentissage d'un CNN selon le premier aspect, puis d'une étape de :
(c) Classification par des moyens de traitement de données d'un client de ladite donnée d'entrée, au moyen du CNN.

Selon un troisième et un quatrième aspect, l'invention propose un produit programme d'ordinateur comprenant des instructions de code pour l'exécution d'un procédé selon le premier ou le deuxième aspect et un moyen de stockage lisible par un équipement informatique sur lequel un produit programme d'ordinateur comprend des instructions de code pour l'exécution d'un procédé selon le premier ou le deuxième aspect

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre des procédés selon l'invention ;
- la figure 2 représente des exemples de versions alternatives d'une donnée d'apprentissage obtenue lors de la mise en œuvre du procédé d'apprentissage selon l'invention ;

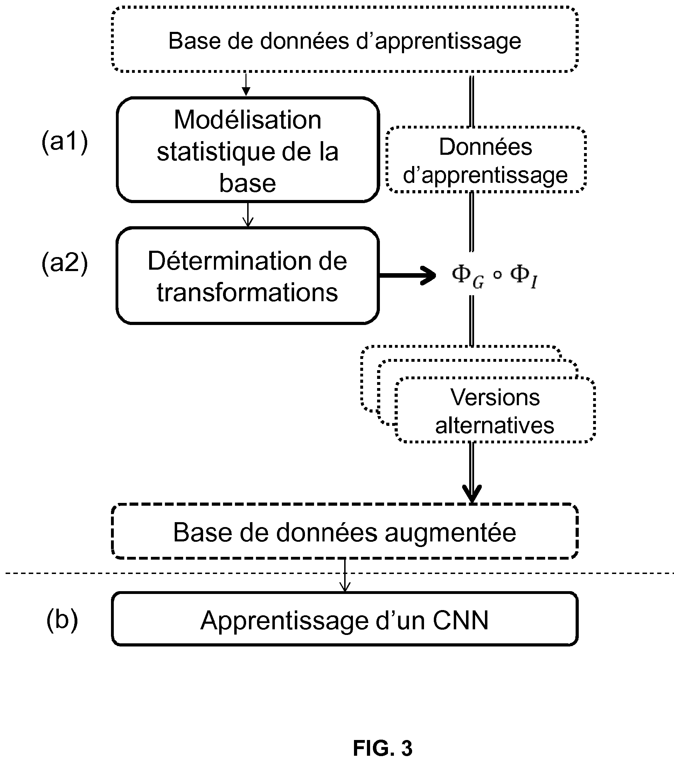

- la figure 3 représente schématiquement les étapes du procédé d'apprentissage selon l'invention

### DESCRIPTION DETAILLEE

### Architecture

Le présent procédé propose un procédé d'apprentissage de paramètres d'un réseau de neurones à convolution (CNN) pour la classification de données. Un CNN appris grâce à ce procédé pourra être utilisé conformément à l'art antérieur pour la classification d'une donnée d'entrée, en d'autres termes le présent procédé d'apprentissage ne nécessite pas un procédé spécifique de classification, i.e. le CNN obtenu pourra être directement utilisé. Comme l'on verra, les performances en classification sont sensiblement améliorées.

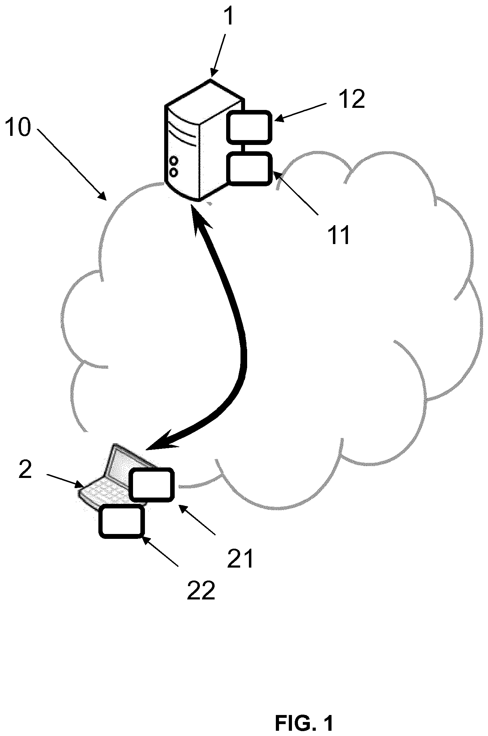

Le présent procédé est mis en œuvre au sein d'une architecture telle que représentée par la **figure 1****,** grâce à un serveur 1 et un client 2. Le serveur 1 est l'équipement d'apprentissage (mettant en œuvre le procédé d'apprentissage) et le client 2 est un équipement de classification (mettant en œuvre le procédé de classification), par exemple un terminal d'un utilisateur. Il est tout à fait possible que les deux équipements 1, 2 soient confondus.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple un disque.

Le serveur 1 stocke une base de données d'apprentissage, i.e. un ensemble de données déjà classifiées (par opposition aux données dites d'entrée que l'on cherche justement à classifier).

En effet, les données d'entrée ou d'apprentissage sont de type image, et sont représentatives d'un trait biométrique (en d'autres termes il s'agit d'images du trait biométrique), avantageusement choisi parmi une empreinte digitale, une paume, un visage, un iris, une silhouette, un réseau sanguin d'une partie du corps ; de l'utilisateur ; et de façon préférée une empreinte digitale (comme l'on verra, le présent procédé est tout particulièrement efficace dans ce dernier cas). Ladite classification est alors respectivement une reconnaissance digitale de l'utilisateur (authentification ou identification de l'individu par reconnaissance de son empreinte digitale). De façon classique, une telle base de données d'apprentissage comprend plusieurs données représentatives d'un même trait biométrique, i.e. représentant la même identité, par exemple plusieurs occurrences de la même empreinte digitale.

### CNN

Un CNN contient généralement quatre types de couches traitant successivement l'information :
- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire NL est typiquement la fonction *ReLU* (Rectified Linear Unit, i.e. Unité de Rectification Linéaire) qui est égale à *f(x) = max(0,* x*)* et la couche de pooling (noté *POOL)* la plus utilisée est la fonction *MaxPool2*×*2* qui correspond à un maximum entre quatre valeurs d'un carré (on met en commun quatre valeurs en une seule).

La couche de convolution, notée *CONV,* et la couche entièrement connectée, notée FC, correspondent généralement à un produit scalaire entre les neurones de la couche précédente et les poids du CNN.

Les architectures typiques de CNN empilent quelques paires de couches *CONV* → *NL* puis ajoutent une couche *POOL* et répètent ce schéma *[(CONV* → *NL)^{p}* → *POOL]* jusqu'à obtenir un vecteur de sortie de taille suffisamment petite, puis terminent par deux couches entièrement connectées FC.

Voici une architecture CNN typique :
*INPUT* → *[[CONV* → *NL]^{p}* → *POOL]ⁿ* → *FC* → *FC*

### Augmentation

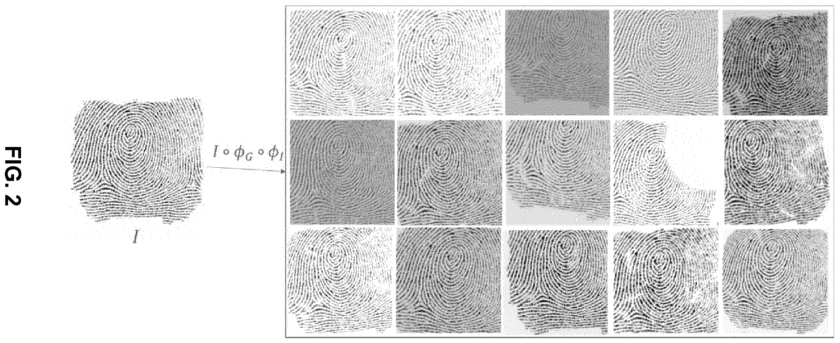

En référence à la **figure 2****,** le procédé d'apprentissage est mis en œuvre par les moyens de traitement de données 11 du serveur 1.

Le présent procédé se distingue en ce qu'il comprend une « augmentation » particulière des données d'apprentissage. Au moins une donnée d'apprentissage (avantageusement une pluralité, voir toutes) est augmentée, c'est-à-dire que plusieurs versions alternatives de cette donnée d'apprentissage sont générées dans une étape (a) chacune par l'application d'au moins une transformation choisie parmi un ensemble de transformations de référence. Plus précisément, on dispose d'une « famille » de transformations de référence (généralement différant par des valeurs de paramètres) et on en choisit aléatoirement une pluralité à appliquer sur la donnée « originale » de sorte à en obtenir les versions alternatives. De façon préférée, lesdites transformations sont des transformations géométriques (notées Φ*_{G}*) et/ou des transformations en intensité (notées Φ*_{I}*).

En d'autres termes, et comme l'on verra plus tard, la génération d'une version alternative de la donnée d'apprentissage comprend ainsi préférentiellement l'application d'au moins une transformation géométrique choisie parmi un ensemble de transformations géométriques de référence, et avantageusement l'application d'au moins une transformation en intensité choisie parmi un ensemble de transformations en intensité de référence. Dans tous les cas, le choix parmi l'ensemble de transformations de référence peut être aléatoire, ou alternativement on peut appliquer toutes les transformations de référence une fois de sorte à générer autant de versions alternatives de l'exemplaire original de la donnée d'apprentissage considéré qu'il y a de transformations.

Dans le mode de réalisation préféré comprenant à la fois une transformation géométrique et une transformation en intensité, en notant *l* une donnée d'apprentissage, on applique successivement la transformation optique et la transformation en intensité, c'est-à-dire que chaque version alternative de cette donnée d'apprentissage est de la forme / ∘ Φ*_{G}* ∘ Φ*_{I}*. En croisant les transformations géométriques et en intensité, on obtient rapidement un grand nombre de versions alternatives réalistes et variées pour une donnée d'apprentissage, comme l'on voir par exemple sur la figure 1 qui représente un exemple dans le cas des données de type empreinte digitale. On comprendra qu'on peut tout à fait faire l'inverse et commencer par la transformation en intensité (*I*∘Φ*_{I}*∘Φ*_{G}*), voir en cumuler plusieurs.

Par transformation, on entend toute fonction générant une image modifiée à partir d'une image originale. Par transformation géométrique, on entend une transformation portant sur la position des points de l'image, en d'autres termes une déformation. On comprend qu'il s'agit d'une bijection de l'image dans elle-même, c'est-à-dire ne changeant pas « l'intensité » des points déplacés, i.e. les valeurs associées. Les transformations géométriques Φ*_{G}* sont ainsi avantageusement représentées par des champs de distorsion non-linéaires bijectifs.

Par transformations en intensité, on entend les autres transformations, i.e. ne déplaçant pas les points mais modifiant les valeurs associées, correspondant par exemple à des modifications du contraste, de la luminosité, ou simulant des altérations du trait biométrique. Par exemple, pour les empreintes digitales on peut considérer des occultations partielles, des variations de relief (« embossing »), des apparitions des cicatrices, de l'érosion/dilatation des crêtes, etc. Les transformations d'embossing permettent ainsi de modéliser la variabilité des capteurs avec ou sans contact. Les capteurs sans contact introduisent effectivement des effets d'ombre créés par le relief de l'empreinte. Les érosions/dilatations sont des opérations morphologiques simples d'érosion et de dilatation permettant de modéliser la variabilité de largeur des crêtes affectée par l'humidité ou la sécheresse du doigt et la force avec laquelle le doigt est appuyé sur un capteur avec contact. L'homme du métier saura construire de telle transformations en intensité Φ*_{I}*.

### Principe de l'invention

L'originalité est de considérer un ensemble des transformations de référence respectant la distribution statistique de transformations observées dans la base de données d'apprentissage au moyen d'un modélisation statistique particulière, basée sur ce que l'on appelle un atlas statistique. En d'autres termes, on considère l'ensemble des transformations dont les paramètres sont issus d'une modélisation statistique sur une base « réelle » (i.e. avec une répartition des modifications associées « naturelle ») qu'est la base d'apprentissage de sorte à procéder à des augmentations réalistes qui ne perturbent pas l'apprentissage du modèle.

En effet, cela permet des altérations aléatoires restant à l'intérieur de la variabilité normale observée : on comprend qu'en effectuant aléatoirement des transformations respectant la distribution des transformations observées dans la base de données d'apprentissage, les « nouvelles modifications » obtenues ne modifient pas cette distribution. On obtient alors des transformations spécifiques à l'objet de la base d'apprentissage respectant la prédominance des modifications les unes par rapport aux autres, et la base d'apprentissage ainsi augmentée (i.e. avec les versions alternatives générées) forme un tout cohérent. Dans le cas contraire, le CNN apprend du bruit structurel et est biaisé par des versions alternatives irréalistes de données d'apprentissage.

A noter qu'il faut bien comprendre que lesdites transformations observées dont on détermine la distribution statistique sont celles entre données d'apprentissage représentatives du même trait biométrique. En d'autres termes, on peut considérer que dès que l'on a deux données d'apprentissage qui correspondent au même trait, i.e. la même biométrie acquise deux fois, alors on peut considérer que l'une est la modification de l'autre et qu'il existe une transformation permettant de passer de l'une à l'autre.

Dans le présent procédé, le principe de respecter la distribution statistique de transformations observées dans la base de données d'apprentissage peut être appliqué aux transformations géométriques Φ*_{G}* et avantageusement aux transformations en intensité Φ*_{I}*. Dans l'exemple préféré qui sera décrit dans la suite de la description, on appliquera ce principe uniquement aux transformations géométriques Φ*_{G}* (i.e. l'étape (a) comprend l'application d'au moins une transformation géométrique choisie parmi un ensemble de transformations géométriques de référence respectant une distribution statistique de transformations géométriques - i.e. de distorsions - observée dans la base de données d'apprentissage), et les transformations en intensité Φ*_{I}* pourront quant à elles être choisies comme respectant une distribution statistique observée non pas sur la base de données d'apprentissage, mais de façon générale sur plusieurs types de moyens d'acquisition des données considérées (par exemple pour des empreintes digitales, capteur capacitif, optique ou à distance). Ainsi l'ensemble de transformations en intensité de référence pourra être prédéterminé (voir plus loin).

L'homme du métier comprendra toutefois que l'invention n'est pas limitée à ce mode de réalisation et qu'on pourra alternativement construire l'ensemble de transformation en intensité Φ*_{I}* de référence respectant la distribution statistique de transformations en intensité observées dans la base de données d'apprentissage.

Par exemple, des statistiques peuvent être effectuées sur les paramètres à considérer, par exemple la largeur des crêtes. Chaque paramètre est considéré comme une variable aléatoire et les transformations Φ*_{I}* sont effectuées aléatoirement en série sur l'exemplaire original.

Ainsi, l'étape (a) comprend des sous-étapes préalables (a1) de modélisation statistique des transformations observées (distorsions si l'on considère les transformations géométriques) dans ladite base de données d'apprentissage, et (a2) de génération dudit ensemble de transformations de référence respectant la distribution statistique des transformations observées dans la base de données d'apprentissage, en fonction du résultat de ladite modélisation statistique.

Comme évoqué, cette modélisation de l'étape (a1) se fait sous la forme d'un atlas statistique des données d'apprentissage. Un atlas statistique des distorsions contient une moyenne des distorsions ainsi que la variabilité de ces distorsions sur une population de données d'apprentissage. En d'autres termes, la construction de l'atlas statistique contient un « modèle moyen » correspondant à, pour chaque classe (i.e. l'ensemble des données d'apprentissages représentatives du même trait), une image moyenne (en particulier au sens du recalage, voir plus loin) ainsi que la variabilité des transformations géométriques vers ce modèle moyen observées sur la base de données d'apprentissage.

Pour obtenir ce modèle moyen, l'homme du métier pourra par exemple adapter la méthode décrite dans le document F.Girard, C.Kavalec, F.Cheriet, "Statistical atlas-based descriptor for an early detection of optic disc abnormalities, " J. Med. Imag. 5(1) 014006 (6 March 2018*),* en utilisant les bases mathématiques décrites dans le document M. Turk and A. Pentland, "Eigenfaces for recognition," Journal of Cognitive Neuroscience 1991 3:1, 71-86, à savoir choisir pour chaque classe une image de référence parmi les images d'une classe, puis faire évoluer cette empreinte de référence en calculant la moyenne des difféomorphismes (par exemple avec le Log-demons comme expliqué dans le document F.Girard, C.Kavalec, F.Cheriet, "Statistical atlas-based descriptor for an early detection of optic disc abnormalities, " J. Med. Imag. 5(1) 014006 (6 March 2018*))* à chaque itération.

De manière préférée, l'étape (a1) comprend ensuite la détermination des transformations « relatives » définissant ladite moyenne des distorsions, qui sont les transformations non-linéaires permettant de passer d'une donnée d'une classe de données d'apprentissage représentatives d'un même trait biométrique à l'image moyenne de cette classe. Ladite modélisation statistique des transformations observées dans ladite base de données d'apprentissage est ainsi préférentiellement effectuée sur la base de ces transformations relatives, i.e. le modèle statistique est obtenu en analysant statiquement ces transformations relatives, qui sont totalement représentatives des transformations observées réelles et permettent donc de reproduire la distribution statistique de transformations géométriques observées dans la base de données d'apprentissage.

Cette procédure permet d'analyser des déformations réalistes très fortes vers cette moyenne, au contraire de la technique exposée dans le document Soren Hauberg et al., « Dreaming More Data: Class-dependant Distributions over Diffeomorphisms for Learned Data Augmentation*"* qui en l'absence d'atlas est limitée à faire des statistiques sur des petits clusters (K=5) de caractères proches, d'où une augmentation géométrique basée sur des déformations très petites qui donc omet complètement des déformations plus larges.

A noter qu'effectuer des statistiques sur les champs de distorsion n'est pas naturel, l'opération de base de l'espace des champs de distorsion étant la composition et non l'addition.

L'astuce est de considérer l'espace tangent au champ de distorsion qui équivaut exactement au champ de vitesse si la transformation est difféomorphique. Dans l'espace tangent, les opérations habituelles d'espace vectoriel (addition, produit scalaire) existent et il est possible d'utiliser les outils statistiques comme l'Analyse en Composantes Principales (ACP).

Plus précisément, pour construire ledit atlas statistique des distorsions, dans un premier temps, est préférentiellement formé un repère commun dans lequel les données d'apprentissage sont recalées par une transformation affine, en particulier en fonction de la position d'éléments clé (par exemple des cores et des deltas dans le cas d'empreintes digitales, notamment en utilisant la méthode décrite dans le document L. Fan, S. Wang, H. Wang and T. Guo, "Singular Points Detection Based on Zero-Pole Model in Fingerprint Images," in IEEE Transactions on Pattern Analysis and Machine Intelligence, vol. 30, no. 6, pp. 929-940, June 2008*.).* On note qu'en l'absence de recalage, cela impliquerait que l'atlas statistique des distorsions inclue des translations et des rotations, ce qui n'est pas désiré.

Dans ce repère commun, chaque transformation géométrique non-linéaire observée entre un couple de données d'apprentissages représentatives du même trait peut être exprimée sous la forme d'un champ de distorsion difféormorphique (i.e. bijectif et sans repli). Ainsi, on détermine les transformations géométriques permettant de passer de l'une à l'autre des données d'un couple de données d'apprentissage représentatives d'un même trait biométrique (et ce préférentiellement pour tous les couples possibles de sorte à obtenir toutes les transformations).

Pour cela, on peut définir un (premier) champ de distorsion (non difféomorphique) représenté par exemple une « Thin Plate Spline » (TPS) en appliquant par exemple la méthode décrite dans le document A.Ross, S.C.Dass, A.K.Jain (2004) Estimating Fingerprint Deformation. In: Zhang D., Jain A.K. (eds) Biometric Authentication. Lecture Notes in Computer Science, vol 3072. Springer, Berlin, Heidelberg*,* et le rendre difféomorphique (i.e. on obtient un deuxième champ de distorsion cette fois difféomorphique) par une technique de régularisation consistant à supprimer pour chaque point du champ de distorsion les éventuels replis. On peut calculer ainsi la TPS de chaque image vers son image de référence pour déterminer lesdites transformations relatives.

Alors, comme expliqué on peut enfin effectuer des statistiques dans l'espace tangent à l'espace des difféomorphismes en utilisant notamment les bases mathématiques décrites dans le document V.Arsigny, O.Commowick, X.Pennec, N.Ayache. (2006) A Log-Euclidean Framework for Statistics on Diffeomorphisms. In: Larsen R., Nielsen M., Sporring J. (eds) Medical Image Computing and Computer-Assisted Intervention - MICCAI 2006. MICCAI 2006. Lecture Notes in Computer Science, vol 4190. Springer, Berlin, Heidelberg*.*

En appliquant par exemple une ACP, les modes de variabilité sous forme de champ de distorsion peuvent être identifiés, comme dans la méthode décrite dans le document F.Girard, C.Kavalec, F.Cheriet, "Statistical atlas-based descriptor for an early detection of optic disc abnormalities," J. Med. Imag. 5(1) 014006 (6 March 2018*).*

La partie géométrique de l'augmentation de données consiste alors en particulier à appliquer une fraction des vecteurs propres issus de l'analyse en composantes principales. En d'autres termes, lesdites transformations géométriques dudit ensemble sont déterminées à l'étape (a2) comme les transformations géométriques définies par les vecteurs propres issus de l'analyse en composantes principales.

Comme expliqué, si l'étape (a) comprend l'application d'au moins une transformation géométrique choisie parmi un ensemble de transformations géométriques de référence respectant une distribution statistique de transformations géométriques observées dans la base de données d'apprentissage, elle comprend en outre avantageusement l'application d'au moins une transformation en intensité choisie parmi un ensemble de transformations en intensité de référence, cette fois prédéterminée (i.e. non fonction de la base de données d'apprentissage), les transformations étant composées pour générer les version alternatives.

Dans ce mode de réalisation, les transformations en intensité Φ*_{I}* peuvent être quant à elles obtenues en modélisant statistiquement les dynamiques (moyenne et variance) d'intensité sur plusieurs types de moyens d'acquisition des données considérées (par exemple pour des empreintes digitales, capteur capacitif, optique ou à distance), plusieurs types d'acquisitions (par exemple pour des empreintes digitales, acquisitions latentes, bout de doigt, doigt entier) et plusieurs « contextes » (liés à l'environnement, par exemple la « qualité » d'empreintes : cicatrices, doigt sec, etc.). Ces dynamiques donnent des distributions sur les paramètres de contraste, de luminosité, et/ou des paramètres contextuels propres au type de trait biométrique considéré.

### Apprentissage et classification

A l'issue de l'étape (a), on dispose d'une base de données d'apprentissage « augmentée » desdites versions alternatives des données, c'est-à-dire qu'elle comprend à présent, outre les exemplaires originaux des données d'apprentissage, leurs versions alternatives. En d'autres termes, la taille de la base de données d'apprentissage a été démultipliée : dans l'exemple de la figure 2, on a généré quinze versions alternatives pour une donnée d'apprentissage.

Les données d'apprentissages sont déjà classifiées, et on peut classifier chaque version alternative d'une donnée d'apprentissage identiquement à son exemplaire original (puisqu'ils sont représentatifs du même trait biométrique).

Dans une étape (b), à partir de ladite base de données d'apprentissage augmentée, le premier serveur apprend les paramètres du CNN de façon classique.

Le CNN appris peut être stocké le cas échéant sur des moyens de stockage de données 12 du client 2 pour utilisation en classification.

On comprendra que les versions alternatives ne sont pas nécessairement stockées dans la base de données d'apprentissage lorsqu'elles sont générées : il est possible de les générer à la volée, voire même de façon concomitante avec l'étape (b). Plus précisément, dans ce dernier cas les éventuelles étapes (a1) et (a2) sont d'abord mises en œuvre pour déterminer ledit ensemble de transformations de référence, puis le reste de l'étape (a) (l'application des transformations pour générer les versions alternatives) est mis en œuvre au moment de l'étape (b). Ainsi les versions alternatives sont « à usage unique », c'est à dire que la base d'apprentissage d'origine est augmentée de façon aléatoire et infinie sans demander davantage de stockage.

L'invention concerne selon un deuxième aspect un procédé de classification d'une donnée d'entrée (en particulier une image d'un trait biométrique dont l'identité associée est à déterminer) comprenant la mise en œuvre du procédé d'apprentissage d'un CNN selon le premier aspect (étapes (a) et (b)), puis la mise en œuvre d'une étape (c) de classification par les moyens de traitement de données 21 de client 2 de ladite donnée d'entrée, au moyen du CNN

Cette étape (c) est mise en œuvre comme expliqué de façon classique, on comprend juste que le CNN a été appris sur une base de données d'apprentissage plus grande et plus réaliste, et présente par conséquent des performances améliorées en fonctionnement.

### Produit programme d'ordinateur

Selon un troisième et un quatrième aspects, l'invention concerne un produit programme d'ordinateur comprenant des instructions de code pour l'exécution (en particulier sur les moyens de traitement de données 11, 21 du serveur 1 ou du client 2) d'un procédé selon le premier aspect de l'invention d'apprentissage de paramètres d'un CNN ou un procédé selon le deuxième aspect de l'invention de classification d'une donnée d'entrée, ainsi que des moyens de stockage lisibles par un équipement informatique (une mémoire 12, 22 du serveur 1 ou du terminal 2) sur lequel on trouve ce produit programme d'ordinateur.

## Revendications

1. Procédé d'apprentissage de paramètres d'un réseau de neurones à convolution, CNN, pour la classification de données de type image représentatives d'un même trait biométrique, le procédé comprenant la mise en œuvre, par des moyens de traitement de données (11) d'un serveur (1), d'étapes de :
(a) Génération, pour au moins une donnée d'une base de données d'apprentissage de données de type image représentatives d'un même trait biométrique déjà classifiées, de plusieurs versions alternatives de cette donnée chacune par l'application d'au moins une transformation géométrique choisie parmi un ensemble de transformations de référence respectant une distribution statistique de transformations géométriques observées dans la base de données d'apprentissage, comprenant la construction d'un atlas statistique des données d'apprentissage contenant un modèle moyen d'images de la base de données d'apprentissage ainsi que la variabilité des transformations géométriques observées sur la base de données d'apprentissage.
(b) Apprentissage, à partir de la base de données d'apprentissage déjà classifiées augmentée desdites versions alternatives des données, des paramètres dudit CNN ;
dans lequel l'étape (a) comprend des sous-étapes de :
(a1) Modélisation statistique des transformations observées dans ladite base de données d'apprentissage grâce audit atlas statistique des données d'apprentissage ;
(a2) Détermination dudit ensemble de transformations de référence respectant une distribution statistique de transformations observées dans la base de données d'apprentissage, en fonction du résultat de ladite modélisation statistique.

2. Procédé selon la revendication 1, dans lequel lesdites traits biométriques sont choisis parmi des empreintes digitales, des paumes, des visages, des iris, des silhouettes, des réseaux sanguins d'une partie du corps, et en particulier des empreintes digitales.

3. Procédé selon l'une des revendications 1 à 2, dans lequel lesdites transformations observées dans la base de données d'apprentissage sont les transformations non-linéaires permettant de passer de l'une à l'autre des données d'un couple de données d'apprentissage représentatives d'un même trait biométrique, l'étape (a1) comprenant la détermination des transformations observées.

4. Procédé selon la revendication 3, dans lequel ledit modèle moyen d'images de l'atlas statistique comprend, pour chaque ensemble de données d'apprentissage représentatives d'un même trait biométrique, une image moyenne associée audit ensemble ; l'étape (a1) comprenant en outre la détermination des transformations relatives non-linéaires permettant de passer d'une donnée d'apprentissage à l'image moyenne associée à l'ensemble auquel appartient cette donnée d'apprentissage ; la modélisation statistique des transformations observées dans ladite base de données d'apprentissage étant effectuée sur la base desdites transformations relatives.

5. Procédé selon la revendication 4, dans lequel l'étape (a1) comprend la détermination, pour chaque ensemble de données d'apprentissage représentatives d'un même trait biométrique, de l'image moyenne associée à partir des transformations observées au sein de l'ensemble.

6. Procédé selon l'une des revendications 1 à 5, dans laquelle lesdites transformations géométriques observées dans la base de données d'apprentissage sont déterminées sous la forme d'un champ de distorsion non-difféomorphique, rendu difféomorphique par application d'une technique de régularisation.

7. Procédé selon la revendication 6, dans lequel ladite détermination des transformations géométriques observées dans la base de données d'apprentissage comprend le recalage préalable des données d'apprentissage dans un repère commun.

8. Procédé selon l'une des revendications 6 et 7, dans lequel la construction dudit atlas statistique comprend en outre la mise en œuvre d'outils statistiques dans l'espace tangent audit champ de distorsion difféomorphique.

9. Procédé selon la revendication 8, dans lequel lesdits outils statistiques comprennent au moins l'analyse en composantes principales.

10. Procédé selon la revendication 9, dans lequel les transformations géométriques de référence sont déterminées à l'étape (a2) comme les transformations géométriques définies par les vecteurs propres issus de l'analyse en composantes principales

11. Procédé selon l'une des revendications 1 à 10, dans lequel l'étape (a) comprend outre l'application d'une transformation en intensité choisie parmi un ensemble de transformations en intensité de référence prédéterminées, pour générer les versions alternatives des données d'apprentissages.

12. Procédé de classification d'une donnée d'entrée, **caractérisé en ce qu'**il comprend la mise en œuvre du procédé d'apprentissage d'un CNN selon l'une des revendications 1 à 11, puis d'une étape de :
(c) Classification par des moyens de traitement de données (21) d'un client (2) de ladite donnée d'entrée, au moyen du CNN.

13. Produit programme d'ordinateur comprenant des instructions de code pour l'exécution d'un procédé selon l'une des revendications 1 à 12 lorsque ledit programme est exécuté par un ordinateur.

14. Moyen de stockage lisible par un équipement informatique sur lequel un produit programme d'ordinateur comprend des instructions de code pour l'exécution d'un procédé selon l'une des revendications 1 à 12

## Patentansprüche

1. Verfahren zum Lernen von Parametern eines neuronalen Netzes mit Konvolution, Convolutional Neural Network, CNN, zur Klassifizierung von Daten vom Bildtyp, die für dasselbe biometrische Merkmal repräsentativ sind, wobei das Verfahren die Implementierung der folgenden Schritte durch Datenverarbeitungsmittel (11) eines Servers (1) umfasst:
(a) Generierung, für mindestens ein Datenelement einer Lerndatenbank von bereits klassifizierten Daten vom Bildtyp, die für dasselbe biometrische Merkmal repräsentativ sind, von mehreren alternativen Versionen dieses Datenelements, jeweils durch die Anwendung mindestens einer geometrischen Transformation, die ausgewählt wird aus einer Gruppe von Referenztransformationen, die einer statistischen Verteilung der in der Lerndatenbank beobachteten geometrischen Transformationen entspricht, welche die Konstruktion eines statistischen Atlas von Lerndaten, der ein durchschnittliches Modell von Bildern aus der Lerndatenbank sowie die Variabilität der in der Lerndatenbank beobachteten geometrischen Transformationen enthält, umfasst.
(b) Lernen, aus der Datenbank der bereits klassifizierten Lerndaten, die um die alternativen Datenversionen erweitert wurde, der Parameter des CNN;
wobei Schritt (a) die folgenden Teilschritte umfasst:
(a1) Statistische Modellierung der beobachteten Transformationen in der Lerndatenbank durch den statistischen Atlas von Lerndaten;
(a2) Bestimmung des genannten Satzes von Referenztransformationen, die einer statistischen Verteilung von in der Lerndatenbank beobachteten Transformationen entsprechen, in Abhängigkeit vom Ergebnis der genannten statistischen Modellierung.

2. Verfahren nach Anspruch 1, in dem die biometrischen Merkmale aus Fingerabdrücken, Handflächen, Gesichtern, Iris, Silhouetten, Blutbahnen eines Körperteils, und insbesondere aus Fingerabdrücken ausgewählt werden.

3. Verfahren nach einem der Ansprüche 1 bis 2, in dem die in der Lerndatenbank beobachteten Transformationen die nichtlinearen Transformationen sind, die es ermöglichen, von einem Paar von Lerndaten, die für dasselbe biometrische Merkmal repräsentativ sind, zu einem anderen zu wechseln, wobei Schritt (a1) das Bestimmen der beobachteten Transformationen umfasst.

4. Verfahren nach Anspruch 3, in dem das durchschnittliche Bildmodell des statistischen Atlas für jeden Satz von Lerndaten, die für dasselbe biometrische Merkmal repräsentativ sind, ein dem Satz zugeordnetes Durchschnittsbild umfasst; wobei Schritt (a1) ferner die Bestimmung der relativen nichtlinearen Transformationen umfasst, die es ermöglichen, von einem Lerndatenelement zu dem Durchschnittsbild zu gelangen, das dem Satz zugeordnet ist, zu dem dieses Lerndatenelement gehört; wobei die statistische Modellierung der in der Lerndatenbank beobachteten Transformationen auf der Basis der relativen Transformationen durchgeführt wird.

5. Verfahren nach Anspruch 4, in dem Schritt (a1) für jeden Satz von Lerndaten, die für dasselbe biometrische Merkmal repräsentativ sind, die Bestimmung des zugeordneten Durchschnittsbildes ausgehend von den beobachteten Transformationen innerhalb des Satzes umfasst.

6. Verfahren nach einem der Ansprüche 1 bis 5, in dem die in der Lerndatenbank beobachteten geometrischen Transformationen in Form eines nicht-diffeomorphen Verzerrungsfeldes bestimmt werden, das durch Anwendung einer Regularisierungstechnik diffeomorph gemacht wurde.

7. Verfahren nach Anspruch 6, in dem die Bestimmung der in der Lerndatenbank beobachteten geometrischen Transformationen die vorherige Neuausrichtung der Lerndaten in einem gemeinsamen Koordinatensystem umfasst.

8. Verfahren nach einem der Ansprüche 6 oder 7, in dem die Konstruktion des statistischen Atlas ferner die Implementierung statistischer Werkzeuge in dem Raum umfasst, der das diffeomorphe Verzerrungsfeld tangiert.

9. Verfahren nach Anspruch 8, in dem die statistischen Werkzeuge mindestens die Hauptkomponentenanalyse umfassen.

10. Verfahren nach Anspruch 9, in dem die geometrischen Referenztransformationen in Schritt (a2) als die geometrischen Transformationen bestimmt werden, die durch die Eigenvektoren aus der Hauptkomponentenanalyse definiert sind.

11. Verfahren nach einem der Ansprüche 1 bis 10, in dem Schritt (a) zusätzlich die Anwendung einer Intensitätstransformation umfasst, die aus einem Satz von vorbestimmten Referenzintensitätstransformationen ausgewählt wird, um die alternativen Versionen der Lerndaten zu generieren.

12. Verfahren zum Klassifizieren von Eingangsdaten, **dadurch gekennzeichnet, dass** es die Implementierung des Verfahrens zum Lernen eines CNN nach einem der Ansprüche 1 bis 11 umfasst, gefolgt von einem Schritt der:
(c) Klassifizierung eines Clients (2) der genannten Eingabedaten durch Datenverarbeitungsmittel (21) unter Verwendung des CNN.

13. Computerprogrammprodukt, umfassend Codeanweisungen für die Ausführung eines Verfahrens nach einem der Ansprüche 1 bis 12, wenn das Verfahren auf einem Computer ausgeführt wird.

14. Computerlesbares Speichermedium, auf dem ein Computerprogrammprodukt Codeanweisungen für die Ausführung eines Verfahrens nach einem der Ansprüche 1 bis 12 umfasst.

## Claims

1. A parameter training method for a convolutional neural network, CNN, for classifying image type data representative of a single biometric trait, the method comprising the implementation, by data processing means (11) of a server (1), of steps of:
(a) For at least one data item from an already classified training database containing image type data representative of a single biometric trait, generating several alternate versions of this data item each by application of at least one geometric transformation chosen from a set of reference transformations satisfying a statistical distribution of geometric transformations observed in the training database, comprising the construction of a statistical atlas of the training data comprising an average model of images from the training database and also the variability of geometric transformations observed in the training database.
(b) Training the parameters of said CNN, from the already classified training database augmented with said alternate versions of the data;
wherein step (a) comprises substeps of:
(a1) Statistical modeling of the transformations observed in said training database by means of said statistical atlas of training data;
(a2) Determining said set of reference transformations satisfying a statistical distribution of transformations observed in the training database depending on the result of said statistical modeling.

2. The method according to claim 1, wherein said biometric traits are chosen from fingerprints, palms, faces, irises, silhouettes, blood networks of a body part, and in particular fingerprints.

3. The method according to one of the claims 1 to 2, wherein said transformations observed in the training database are nonlinear transformations with which to map from one item of a training data pair to the other where the pair is representative of a single biometric trait, step (a1) comprising the determination of the observed transformations.

4. The method according to claim 3, wherein said average model of images from the statistical atlas comprises, for each set of training data representative of a single biometric trait, an average image associated with said set; the step (a1) further comprising the determination of the nonlinear relative transformations with which to map a training data item to the average image associated with the set to which this training data item belongs; the statistical modeling of the transformations observed in said training database being done on the basis of said relative transformations.

5. The method according to claim 4, wherein the step (a1) comprises the determination of the associated average image from transformations observed within the set for each set of training data representative of a single biometric trait.

6. The method according to one of claims 1 to 5, wherein said geometric transformations observed in the training database are determined in the form of a non-diffeomorphic distortion field, made diffeomorphic by application of a regularization technique.

7. The method according to claim 6, wherein said determination of the geometric transformations observed in the training database comprises prior recasting of the training database into a shared reference frame.

8. The method according to one of claims 6 and 7, wherein the construction of said statistical atlas further comprises the implementation of statistical tools in the space tangent to said diffeomorphic distortion field.

9. The method according to claim 8, wherein said statistical tools comprise at least the principal component analysis.

10. The method according to claim 9, wherein the reference geometric transformations are determined in step (a2), like the geometric transformations defined by the eigenvectors coming from the principal component analysis.

11. The method according to one of claims 1 to 10, wherein the step (a) further comprises the application of an intensity transformation chosen from a set of predetermined reference intensity transformations for generating alternate versions of the training data.

12. A classification method for an input data item, **characterized in that** it comprises the implementation of the training method for a CNN according to one of claims 1 to 11, and then a step of:
(c) Classifying a client (2) from said input data item by data processing means (21) using the CNN.

13. A computer program product comprising code instructions for executing a method according to one of claims 1 to 12 when said program is executed on a computer.

14. A computer equipment-readable storage means on which a computer program product comprises code instructions for executing a method according to one of claims 1 to 12.
